# EUROPEAN PATENT SPECIFICATION

(11) **EP 2 283 470 B1**
(45) Date of publication and mention of the grant of the patent: **23.01.2019**
(21) Application number: 08796417.7
(22) Date of filing: 22.07.2008
(51) Int. Cl.: G07C 9/00

(54) **PHYSICAL ACCESS CONTROL USING DYNAMIC INPUTS FROM A PORTABLE COMMUNICATIONS DEVICE**
PHYSISCHE ZUGANGSKONTROLLE UNTER VERWENDUNG VON DYNAMISCHEN EINGABEN AUS EINER TRAGBAREN KOMMUNIKATIONSEINRICHTUNG
CONTRÔLE PHYSIQUE D'ACCÈS UTILISANT LES SAISIES DYNAMIQUES D'UN DISPOSITIF PORTABLE DE COMMUNICATION

(30) Priority: 15.04.2008 US 45097; 21.04.2008 US 106569
(43) Date of publication of application: 16.02.2011
(73) Proprietor: SONY MOBILE COMMUNICATIONS INC., Shinagawa-ku Tokyo 140-0002 (JP)
(72) Inventor: CAMP, William, Chapel Hill North Carolina 27514 (US); BLOEBAUM, Leland Scott, Cary North Carolina 27519 (US); VASA, Yojak, Morrisville North Carolina 27560 (US); DUNKO, Gregory, Cary North Carolina 27511 (US)
(74) Representative: Banzer, Hans-Jörg
(86) International application number: PCT/US2008/070742
(87) International publication number: WO 2009/128854

(56) References cited:
- EP-A- 0 924 657
- EP-A- 1 170 704
- WO-A-01/19016
- WO-A-2005/027027
- GB-A- 2 410 589
- GB-A- 2 420 098

## Description

### BACKGROUND

The present invention relates generally to physical access control systems. More specifically, the invention relates to methods and apparatus for determining whether access to a secure facility is permitted, based at least in part on a captured digital image of a predetermined feature of the secure facility.

Numerous technologies have been developed to limit access to physical resources such as a building, room, or safe. Mechanical access control technologies include conventional locks and keys, combination locks, mechanical keypad locks, and the like. More advanced electronic access control technologies include electronic keypads, magnetic card readers, radio-frequency identification (RFID) systems, fingerprint recognition, and so on.

Many of these technologies require a person who wishes to access a secure facility to remember an access code, possess an encoded access device, or both. Remembering access codes may be challenging for a person who routinely accesses several secure facilities, or for a person who only occasionally accesses a particular facility. Similarly, carrying multiple magnetic cards, RFID devices, or the like may be inconvenient.

GB 2410589 discloses a movable barrier (garage door) including a wireless control and an automatic image recognizer. The image recognizer may include a camera to identify an object, determine whether it is approaching or leaving the barrier, and match the image taken with historical images. The image recognizer may open or close the barrier, or communicate with the wireless control, based a match of the image taken by the camera.

WO 2005027027 discloses a system including a garment to be worn by the user, where the garment has an identifying code such as a bar code. A camera captures an image of the user's face as well as the identifying code. When the computer finds a match between the facial image and the identifying code, a signal is sent to the door lock to open the door.

EP 0924657 discloses a system including a handheld device with a biometric sensor to read a fingerprint image from the user, and a correlator to match the fingerprint image against a stored image. If there is a match, the handheld device wirelessly communicates with the door barring access, and the handheld device generates a code, encrypts it, and transmits the encrypted code to the door. The user may register at the door the first time the user can enter the door by providing a fingerprint to be stored for future use.

### SUMMARY

Disclosed herein are methods and apparatus for controlling access to a secure facility, wherein a determination of whether access is permitted is based at least in part on a digital image, captured by a user device, of one or more predetermined features of the secure facility. The invention discloses a portable electronic device according to independent claim 1 and a method of accessing a secure facility according to independent claim 7. In some embodiments, the user device is a cellular phone equipped with a camera. The techniques disclosed herein may be used to reduee or eliminate the need to remember access codes or carry encoded access devices.

In an exemplary method, an image of a predetermined feature of the secure facility is captured by a user device and compared to stored security data corresponding to the secure facility. A determination of whether access to the secure facility is permitted is made, based on the results of the comparison. The predetermined feature may be a security mechanism attached to the secure facility, for example, or may be textual information, a graphical image, or a machine-readable code posted at the security facility. The comparison process may thus comprise one or more of text recognition, pattern matching, or conversion of a machine-readable code into an electronic code, the results of any of which may be compared to the stored security data to determine whether access should be granted.

In some embodiments, the determination of whether access is permitted may be further based on at least one user-specific authentication factor, location information for the user device, or both. The at least one user-specific authentication factor may comprise, for example, one or more of a user voice sample, a user fingerprint sample, a user-supplied personal identification code, or a device identifier associated with the user device.

In some embodiments of the disclosed methods, the image analysis and access determination processes described herein may be performed at the user device that captures the digital image, or at a remote processing node. In the latter case, the user device transfers the digital image to the remote processing node via one or more communication networks. In some embodiments, the user device also collects one or more authentication factors and/or location information for sending to the remote processing node.

Upon a determination that access is permitted, various embodiments of the invention may provide the user with a security access token. In some embodiments, the security access token may comprise a user-readable access code which may be displayed on the user device. In some of these embodiments, the access code may be disguised with dummy tokens, also displayed on the user device, so that only a user familiar with the actual access code is likely to recognize the correct code. In other embodiments, the security access token may comprise an electronic code which is sent to an electronic lock barring access to the secure facility. In some of these embodiments, the electronic code is transmitted to the electronic lock using a short-range wireless transmitter in the user device. In others, an unlocking command is sent to the electronic lock from the remote processing node.

Portable electronic devices and network processing nodes configured to carry out one or more of the disclosed access control methods are also disclosed.

Of course, those skilled in the art will appreciate that the present invention is not limited to the above contexts or examples, and will recognize additional features and advantages upon reading the following detailed description and upon viewing the accompanying drawings.

### BRIEF DESCRIPTION OF THE DRAWINGS

Figure 1 illustrates a secure facility protected by at least one security mechanism.
Figure 2 illustrates a portable user device according to one or more embodiments of the invention.
Figure 3 illustrates an access control system according to one or more embodiments of the invention.
Figure 4 is a logic flow diagram illustrating an exemplary procedure for controlling access to a secure facility.
Figure 5 is a logic flow diagram illustrating another exemplary procedure for controlling access to a secure facility, wherein a processing node remote from the user device determines whether access is permitted.
Figure 6 is a logic flow diagram illustrating an exemplary method for controlling access to a secure facility, wherein a user device determines whether access is permitted.
Figure 7 is a block diagram illustrating an exemplary portable electronic device.
Figure 8 is a block diagram illustrating an exemplary network processing node according to one or more embodiments of the invention.

### DETAILED DESCRIPTION

Several embodiments of the present invention involve a portable electronic device including wireless communication capabilities. Thus, without limiting the inventive methods and techniques disclosed herein to this context, the present invention is generally described below in reference to a wireless telecommunication system providing data services to a mobile multimedia device. Various systems providing voice and data services have been deployed, such as GSM networks (providing circuit-switched communications) and GPRS (providing packet-switched communications); still others are currently under development. These systems may employ any or several of a number of wireless access technologies, such as Time Division Multiple Access (TDMA), Code Division Multiple Access (CDMA), Frequency Division Multiple Access (FDMA), Orthogonal Frequency Division Multiple Access (OFDMA), Time Division Duplex (TDD), and Frequency Division Duplex (FDD). The present invention is not limited to any specific type of wireless communication network or access technology. Indeed, those skilled in the art will appreciate that the network configurations discussed herein are only illustrative. The invention may be practiced with devices accessing voice and/or data networks via wireless local area networks (WLANs) or via one or more of the emerging wide-area wireless data networks, such as those under development by the 3rd-Generation Partnership Project (3GPP). In some cases, as will be apparent after viewing the drawings and reading the following detailed description, the invention techniques disclosed herein may be practiced with devices having no access to a wireless network at all.

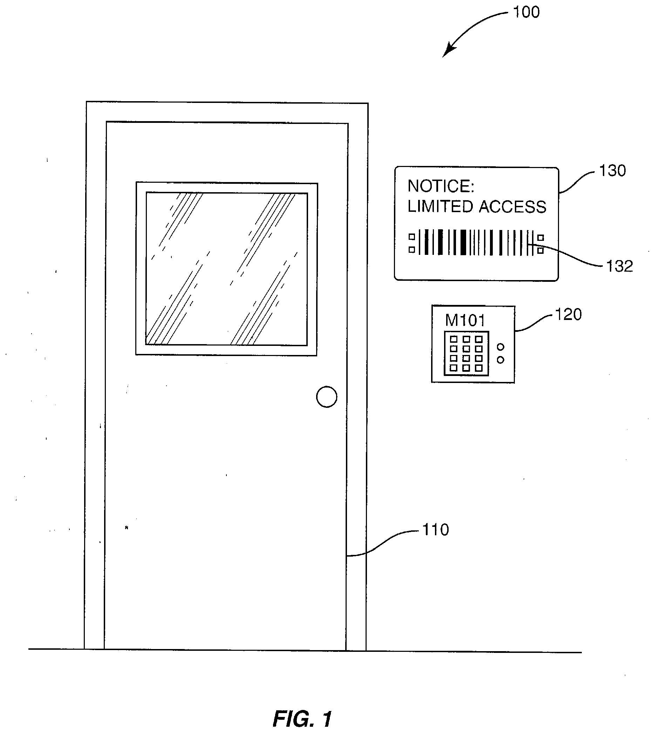

Figure 1 illustrates a secure facility 100 protected by a locked door 110 and a security mechanism 120. Textual information and a bar code are posted on an adjacent sign 130. As will be explained in detail below, a digital image of one or more of these features of the secure facility 100 may be used to identify the facility and to determine whether access to the secure facility 100 should be permitted to a user of the image-capturing device.

Although the secure facility 100 pictured in Figure 1 is a room protected by a locked door, the inventive techniques disclosed herein may be more generally applied to a wide variety of physical access control applications. A secure facility accessed according to one or more embodiments of the invention may thus include a room, multiple rooms, or an entire building. Other secure facilities may include vaults, safes, or lockers. Other examples of secure facilities include machines or devices protected by physical access control mechanisms; these might include automobiles, construction equipment, industrial machines, or the like.

In some cases, a secure facility may be labeled or marked with a code or identifier; these labels or markings may include text, machine-readable codes, images, or some combination of these. For instance, the secure facility 100 pictured in Figure 1 is labeled with at least two identifiers or codes, including the "M101" printed on the security mechanism 120 and the machine-readable code 132 on the sign 130. These labels or markings may be used in some embodiments to uniquely identify a particular secure facility. In other embodiments, labels or markings may not be unique, or may be absent entirely. In these embodiments, the visible characteristics of the secure facility may be used to identify the type of secure facility, or to identify a particular facility from a limited set of possible candidates. In some embodiments, these visible characteristics, whether or not they include labels or markings, may be analyzed in conjunction with location information to identify a particular secure facility.

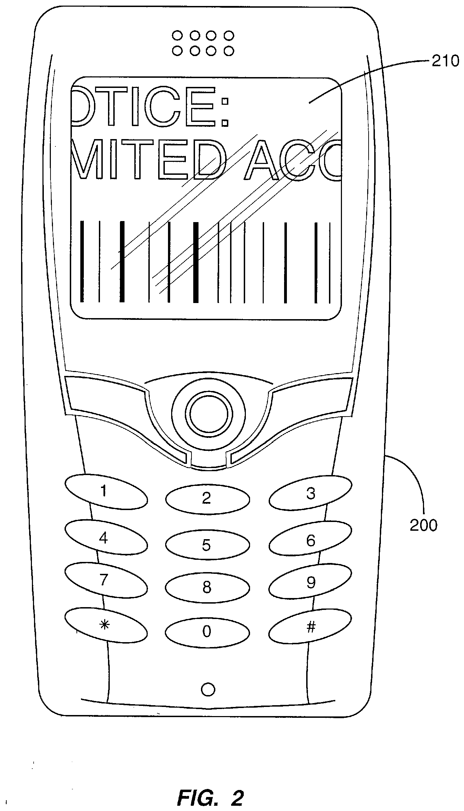

Figure 2 illustrates an exemplary portable communication device according to some embodiments of the invention. In this example, portable device 200 comprises a mobile telephone. Portable device 200 includes a digital camera device (not visible from this view); an image captured by the camera device is displayed on display 210. A camera-equipped portable device may thus be used to capture a digital image of one or more predetermined features of a secure facility; in Figure 2, the captured image on display 210 includes a close-up view of the machine-readable code 132 from Figure 1. As will be explained in more detail below, this digital image may be analyzed to extract one or more characteristic features for identifying a particular facility or type of facility. In some cases this analysis may be carried out by the portable device 200 itself, while in others the digital image is sent to a remote processing node (e.g., using a wireless data capability of the device 200) for analysis.

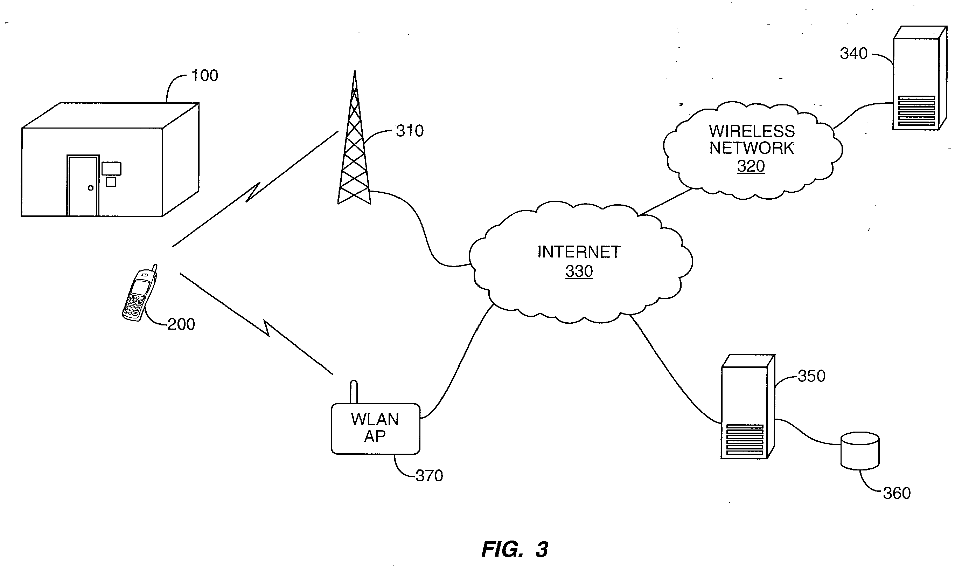

An exemplary system for controlling access to a secure facility is thus pictured in Figure 3. Portable device 200 is positioned adjacent to the secure facility 100 and may communicate with other devices through base station 310, which is connected to wireless network 320. Wireless network 320 is in turn connected to the Internet 330. Portable device 200 can thus communicate with various other devices, including data servers 340 and 350, accessible through the wireless network 320 and Internet 330 respectively. In the pictured system, data server 350 may be configured to provide access through Internet 330 to security data stored in storage device 360. Storage device 360 may comprise one or more of a variety of data storage devices, such as disk drives, one or more other servers, a Redundant Array of Independent Disks (RAID) system, or the like.

Portable device 200 may also include a wireless local-area network (WLAN) transceiver configured for communication with WLAN access point 370. WLAN access point 170 is also connected to Internet 330, providing portable device 200 with alternative connectivity to Internet-based resources such as data server 150.

Portable device 200 may also include positioning capability. In some cases, communication device 200 may include a Global Positioning System (GPS) receiver, in which case device 200 may be able to autonomously determine its current location. In other cases, portable device 200 may relay measurement data to a mobile-assisted positioning function located in the network (e.g., at server 340) in order to determine its location; in some cases, device 200 may simply receive positioning information from a cellular network-based positioning function, or from a database of WLAN access point locations indexed by an access point identifier, such as a BSSID (Basic Service Set Identifier).

In some embodiments, then, server 340 may comprise a location server, connected to the wireless network 320 and maintained by the wireless network's operator. In such embodiments, a key function of location server 340 may be to determine the geographic location of mobile terminals (such portable device 200) using the wireless network 320. Location information obtained by location server 340 may range from information identifying the cell currently serving portable device 200, e.g., position information retrieved from a database indexed by a base station identifier, to more precise location information obtained using Global Positioning System (GPS) technology.

Other technologies, including triangulation methods exploiting signals transmitted from or received at several base stations, may also be used to obtain location information. Triangulation techniques may include Time Difference of Arrival (TDOA) technology, which utilizes measurements of a mobile's uplink signal at several base stations, or Enhanced-Observed Time Difference (E-OTD) technology, which utilizes measurements taken at the portable device 200 of signals sent from several base stations. GPS-based technologies may include Assisted GPS, which utilizes information about the current status of the GPS satellites derived independently of the device 200 to aid in the determination of the terminal's location.

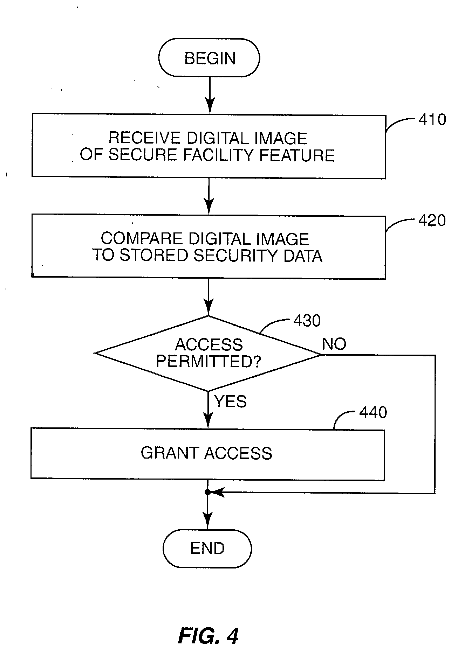

A general method for controlling access to a secure facility, such as might be performed using one or more components of the system pictured in Figure 3, is illustrated with the logic flow diagram of Figure 4. The method begins at block 410 with the receipt of a digital image, captured by a user device, of a predetermined feature of the secure facility. As discussed above, this predetermined feature may include text information posted at the secure facility, an image or machine-readable code posted at the secure facility, or one or more physical features of the secure facility itself. For instance, the predetermined feature may comprise the door to the facility, or a security mechanism, such as a keypad or lock mechanism, protecting the facility.

In any event, at block 420 the digital image is compared to stored security data to determine whether access should be granted to the user of the device that captured the image. In some embodiments, this comparison process may comprise extracting one or more characteristic features from the digital image and comparing these characteristic features to a stored image profile corresponding to the secure facility. In these embodiments, the comparison process may thus include an image matching process. For instance, prominent features, such as the outline of the door and/or of a security mechanism may be compared to one or more image profiles associated with a set of secure facilities. These image profiles may comprise a complete image of the secure facility, a graphical model or template including one or more physical features of the secure facility, or the like. The captured image may be compared to the image profile to obtain a score reflecting the quality of the match; in some embodiments the stored security data may include a minimum score for deciding that an actual match has occurred.

Those skilled in the art will appreciate that the captured image may need to be scaled, translated, and/or rotated in order to properly match the stored image profile. (In some embodiments, of course, any scaling, translation, or rotation operations may be performed on the image profile, rather than on the captured image.) Because these are relatively simple operations, one approach might be to simply apply a series of predetermined scaling, translation, and rotation operations to the captured image, comparing each of the resulting transformed images to the stored image profile. For instance, each of ten possible scales (e.g., ranging from 0.75 to 1.20, in steps of 0.05) may be applied to each of four translation operations in each of the vertical and horizontal dimensions, for each of four angular rotations. Such an embodiment might require a few dozen or several hundred comparisons to the stored image profile or profiles. Another approach may include finding "landmarks," e.g., prominent features, in the captured image and comparing them to similar landmarks in the stored image profile. By comparing dimensions and angles, scale factors and required angles of rotation can be easily determined.

In some embodiments, the characteristic features of the digital image may comprise textual information, a graphical image, or a machine-readable code. In these embodiments, conventional text-recognition or decoding algorithms may be employed to extract the characteristic features from the image. In an embodiment employing text recognition, for example, the recognized text may be compared to text included in the stored security data that corresponds to one or more secure facilities. Similarly, an embodiment employing a machine-readable code (e.g., a one-dimensional or two-dimensional bar code) may convert the machine-readable code to an electronic identifier, which may be compared to one or more secure facility identifiers included in the stored security data. Any of these embodiments might also employ scaling, translation, and rotation operations, as discussed above, to improve the effectiveness of the text recognition or decoding operations.

At block 430, the results of the comparison are used to determine whether access to the secure facility is permitted for the device user. This determination may be based on one or more factors in addition to the comparison results, as will be discussed in more detail below. However, in several embodiments of the invention successful access to the secure facility requires a satisfactory match between the captured image and the security data for the secure facility. As noted before, this match may serve to uniquely identify a particular secure facility, or to determine a group of possible secure facilities from a larger set. As will be discussed further below, additional information, such as location information for the user device, may be used to further narrow the candidate secure facilities, or to confirm that the captured image corresponds to a particular facility.

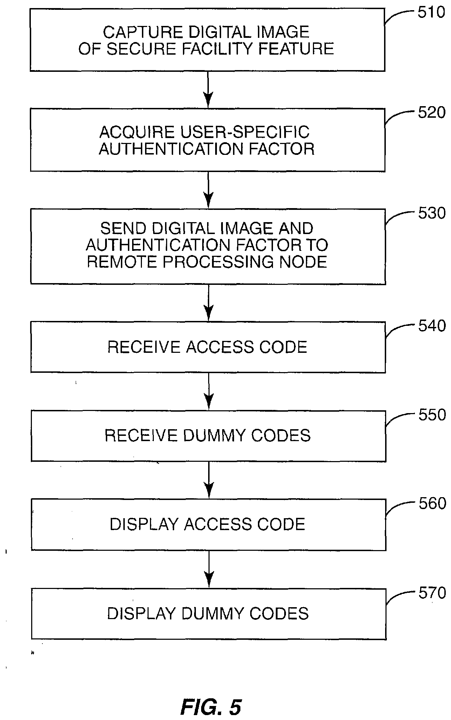

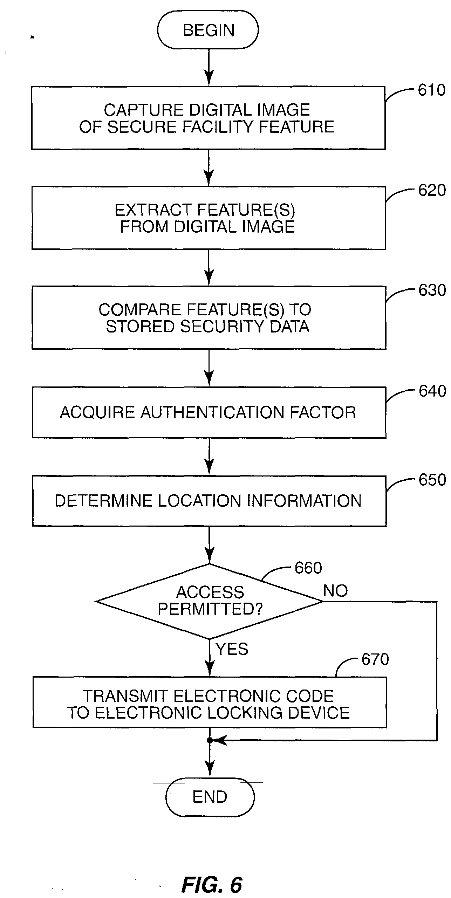

If it is determined at block 430 that access is permitted then access is granted, as shown at block 440. Otherwise, the procedure ends. This granting of access may be manifested by providing the user with an access code, such as a numeric code for entering into a mechanical or electronic keypad at the secure facility. In other embodiments, a grant of access may result in the transmission of an electronic code to an electronic locking device securing the facility. Variants of these access control techniques are described below with respect to Figures 5 and 6.

Those skilled in the art will appreciate that the general access control method pictured in Figure 4 may be implemented by a processing unit in the user device itself, or in a processing node remote from the user device, such as a server device accessible via a wireless network and/or the Internet. In embodiments employing the former approach, the image may be captured by the user device and compared, by a processing unit in the user device, to security data stored in or accessible to the user device. With the latter approach, the captured image may be sent to the remote processing node for the comparison and access determination processes. Logic flow diagrams illustrating examples of each of these embodiments are provided in Figures 5 and 6.

Figure 5 illustrates an access control method that might be implemented at a user's device, wherein the image analysis is performed at a remote processing node. At block 510, a digital image of one or more predetermined features of the secure facility is captured, using a digital camera built into or attached to an end-user device. As was the case with the logic flow diagram of Figure 4, this digital image will be analyzed to determine whether access should be granted to the user of the device.

However, as briefly discussed above, one or more additional factors may also be used to determine whether access is permitted. For instance, one or more user-specific authentication factors may be used to provide a greater degree of security. Thus, at block 520, a user-specific authentication factor is acquired. In some embodiments, this additional user-specific authentication factor may simply be a device identifier associated with the user's device, such as a telephone number or electronic serial number. In some embodiments, the user device may be configured to collect a digitized voice sample of the device user, or a fingerprint sample. In yet other embodiments, a personal identification code (e.g., a personal identification number, PIN, or password) might be collected.

At block 530, the digital image and authentication factor are sent to a remote processing node for analysis. The remote processing node may comprise a server accessible to the user device via the Internet, and is "remote" only in the sense that the user device is not directly physically connected to it. In some embodiments, for instance, the remote processing node may actually be located in or near the secure facility, and accessible to the user device via a wireless local area network. Thus, in some embodiments the user device is configured with access information (e.g., a Uniform Resource Locator, URL, or Internet Protocol address) corresponding to an access control server connected to the Internet. In some embodiments, the digital image and authentication factor are transmitted via a cellular data service or other wide-area wireless network. For instance, the data may be transmitted via a Wideband-CDMA network or Long-Term Evolution (LTE) network. In other embodiments, the digital image and authentication data may be transmitted via a wireless local area network, such as an IEEE 802.11 network.

In any event, the digital image and authentication factor are analyzed at the remote processing node to determine whether access should be granted to the user of the device. As discussed above, the image may be analyzed to identify the particular secure facility, or to narrow down the choices from a large set of possible facilities. The authentication factor may be used in some instances to further identify the particular secure facility. For example, the authentication factor, which may uniquely identify the user, may be used to determine which of several co-located lockers (each a distinct "secure facility") is the user's target. In several embodiments, the authentication factor is used to provide an additional layer of security, e.g., to verify that the particular user is authorized to access the secure facility. In these embodiments, the authentication factor may be compared to security data corresponding to the identified secure facility to determine whether access should be granted.

In the embodiment illustrated in Figure 5, access to the secure facility is controlled by an access code. This access code may be entered by the user into, for example, an electronic or mechanical keypad controlling a locking device. (Of course, other techniques for limiting access to holders of a user access code are possible. For instance, a locking device may employ voice command technology to recognize a spoken access code. Touch screen technology may be employed instead of a keypad. Those skilled in the art will appreciate the applicability of the techniques disclosed herein to a wide variety of access control mechanisms, both mechanical and electronic.) Thus, upon a determination that access is permitted, the server transmits the access code to the user device. This access code is received at block 540.

In some embodiments, the user may only require a reminder of the access code. For additional security, it may thus be desirable to disguise the actual access code by displaying it along with one or more dummy codes, to prevent unauthorized users from gaining access to the secure facility. An authorized user will recognize the actual access code, while an unauthorized user (e.g., a receiver of a stolen or lost user device) will not. These dummy codes may be randomly selected, or generated according to some predetermined rule, and are received at the user device at block 550. At blocks 560 and 570 the access code and dummy codes are displayed. Those skilled in the art will appreciate that the access code and dummy codes may be displayed simultaneously or in a sequence. In either case, the order and/or layout of the displayed codes may be randomly selected. Those skilled in the art will also appreciate that the dummy codes, which are generated at the remote processing node in Figure 5, may instead be generated by the user device. The method pictured in Figure 5 is therefore only one non-limiting example of an access control method employing a remote processing node.

Another non-limiting example of an access control method is pictured in Figure 6. In this example, the method may be performed entirely by the end user device, without the assistance of a remote processing node.

At block 610, the user device captures a digital image of a predetermined feature of the secure facility. At block 620, one or more characteristic features of the digital image are extracted. As discussed above, this feature extraction step may comprise one or more of text recognition, decoding of a machine-readable code, or pattern recognition. At block 630, the extracted feature or features are compared to stored security data for one or more secure facilities.

At block 640, a user-specific authentication factor is acquired by the user device. As discussed above, this authentication factor may comprise a fingerprint sample, a voice sample, an electronic identifier for the user device, a PIN or password, or the like. The authentication factor is used along with the digital image to determine whether access should be granted to the user of the device.

In some embodiments, location information may also be used to identify the secure facility, to provide an additional layer of security, or both. Thus, block 650 illustrates the determination of location information for the user device. In some embodiments, the user device may include positioning technology, such as GPS, or may provide measurement data and/or other information to a network-based positioning system, such as an assisted-GPS system, or an E-OTD system. In other embodiments, the location information may be provided to the device by a network-based positioning system, or may be determined from a database identifying WLAN access point locations.

In any event, the results of the image analysis, the authentication factor, and the location information are used to determine whether access is permitted for the user, as shown at block 660. If not, the process ends. If so, then access is granted.

In some embodiments of the present invention, a user device implementing the method illustrated in Figure 6 may be equipped with a short-range transmitter, such as a Bluetooth wireless transmitter or an infrared transmitter. In such embodiments, an electronic security access token for the secure facility may be generated and transmitted to an electronic locking device protecting the secure facility, as shown at block 670. In these embodiments, then, the secure facility is automatically unlocked as a result of the access validation. In the method pictured in Figure 6, an electronic code is transmitted by the user device directly to the electronic lock; those skilled in the art will appreciate that in other embodiments, such as those employing a remote processing node for the image analysis and access determination steps, an electronic unlocking command may be sent from the remote processing node to an electronic lock protecting the secure facility. In these embodiments, the electronic lock may be connected to the Internet or a private data network using conventional networking means.

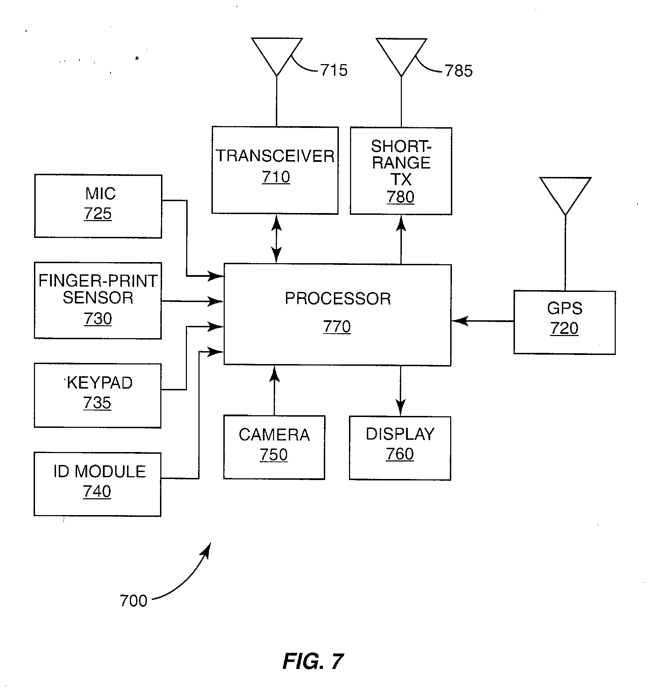

Those skilled in the art will thus appreciate that the methods illustrated in Figures 4-6, and variants thereof, may be implemented using any of a variety of portable electronic devices. An exemplary portable electronic device 700 is pictured in Figure 7. The pictured electronic device 700 may comprise a mobile telephone, a personal digital assistance (PDA) device with mobile telephone capabilities, a laptop computer, or other device with a digital camera capability. Portable electronic device 700 includes a transceiver section 710 configured to communicate with one or more wireless networks via antenna 715. In some embodiments, transceiver section 710 may be a wireless communication unit configured for operation with one or more wide-area networks, such as a W-CDMA network, or a wireless local area network (W-LAN), such as an IEEE 802.11 network, or both.

Portable electronic device 700 further comprises a positioning module 720. In the pictured embodiment, positioning module 270 comprises a complete GPS receiver capable of autonomously determining the device's location. In other embodiments, a GPS receiver with less than full functionality may be included, for taking measurements of GPS signals and reporting the measurements to a network-based system for determination of the mobile device's location. In still others, positioning module 720 may be configured to measure time differences between received cellular signals (or other terrestrial signals) for calculation of the device's location. In some cases this calculation may be performed by the positioning module 720; in others, the results of the measurements are transmitted to a network-based system, using transceiver section 710, for final determination of the location.

Portable electronic device 700 further comprises several input devices, including a microphone 725, fingerprint sensor 730, keypad 735. and identification module 740. The latter may comprise, for example, a Subscriber Identification Module (SIM). One or more of these input devices may be used, in some embodiments, to provide a user-specific authentication factor for use in determining whether or not access to a particular secure facility should be permitted. For example, the microphone 725 (and accompanying analog and digital circuitry) may be used to collect a voice sample from the user for identification and authentication of the user. Similarly, fingerprint sensor 730 may be used to collect a fingerprint sample, and/or keypad 735 used to collect a personal identification code. In some embodiments, an electronic identifier, such as a telephone number, electronic serial number, or other identifier, may be retrieved from the ID module 740 for use as an authentication factor.

Portable electronic device 700 further comprises a camera 750, a display 760, a processing unit 770, and short-range transmitter 780. Short-range transmitter 780, which may comprise, for example, a Bluetooth transceiver, is connected to antenna 785.

In some embodiments of the present invention, processing unit 770 is configured to carry out one or more of the methods described above. In particular, processing unit 770 may be configured to compare stored security data to a digital image, captured by camera 750, of a predetermined feature of a secure facility, and to determine, based on the comparison, whether access to the secure facility is permitted. As discussed above, this determination may be further based on an authentication factor; the authentication factor may be collected by one of the input devices (microphone 725, fingerprint sensor 730, or keypad 735) or retrieved from the ID module 740. In some embodiments, the determination may be further based on location information, which may be determined by GPS 720 or retrieved from a network-based positioning function using the transceiver section 710.

In other embodiments, the analysis of the image and the determination of whether access to the secure facility is permitted may be performed by a remote processing node. In these embodiments, processing unit 770 may be configured to capture a digital image of a predetermined feature of the secure facility, using the digital camera 750, and to send the digital image to the remote processing node, using the transceiver section 710. In these embodiments, the processing unit 770 may receive, via the transceiver section 710, a security access token for use in accessing the secure facility. In some embodiments, the security access token may comprise a user-readable code that is displayed for the user on display 760. In others, the security access token may comprise an electronic code for use in unlocking an electronic locking device barring access to the secure facility; in these embodiments processing unit 770 may be configured to send the electronic code to the electronic locking device using the short-range transmitter 780. The pictured short-range transmitter 780 is a radio transmitter, using antenna 785; those skilled in the art will appreciate that an optical transmitter, such as an infrared transmitter, may also be used.

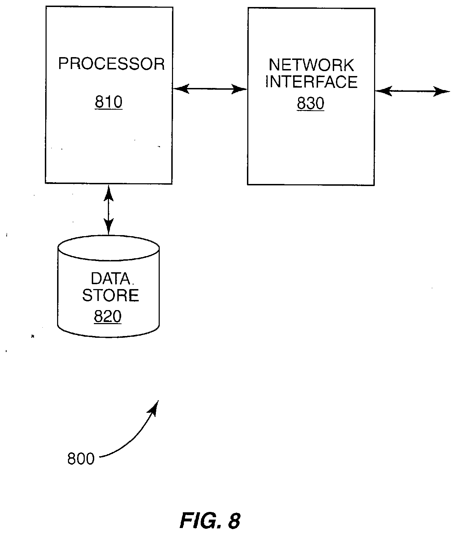

Finally, Figure 8 provides a block diagram of an exemplary network processing node 800 according to one or more embodiments of the invention. Network processing node 800, which may be a data server such as the data server 350 pictured in Figure 1, comprises a processing unit 810, connected via a network communication interface 830 to the wireless network, the Internet, or both, and a data store 820. In some embodiments, the processing unit 810 may be configured to receive from a user electronic device, via the network communication interface 830, a digital image, captured by the user device, of a predetermined feature of a secure facility. The processing unit 810 may be further configured to compare the digital image to security data stored in data store 820, and to determine whether access to the secure facility is permitted based on the comparison. (Those skilled in the art will appreciate that data store 820 may be co-located with processor 810, or may be located at another server or at a remote location accessible via a network interface.) The comparison process may include any of the techniques described above, including, but not limited to, the extraction of characteristic features from the digital image and comparison of those characteristic features to a stored image profile corresponding to the secure facility. As discussed above, in some embodiments the comparison may include text recognition or conversion of a machine-readable code into an electronic identifier; in either case, the result may be compared to security data, stored in data store 820, corresponding to one or more secure facilities.

In some embodiments, processing unit 810 may be configured, upon a determination that access is permitted, to send an unlocking command to an electronic locking device barring access to the secure facility, using network interface 830. In other embodiments, processing unit 810 may send a security access token to the user device, again using the communication interface 830. In some of these embodiments, the processing unit 810 may be further configured to generate one or more dummy tokens and to send those dummy tokens to the user device for display on the user device along with the security access token.

Those skilled in the art will appreciate that the various functions of portable electronic device 700 and network processing node 800 may be implemented with customized or off-the-shelf hardware, general purpose or custom processors, or some combination. Accordingly, each of the described processing blocks may in some embodiments directly correspond to one or more commercially available or custom microprocessors, microcontrollers, or digital signal processors. In other embodiments, however, two or more of the processing blocks or functional elements of device 700 or node 800 may be implemented on a single processor, while functions of other blocks are split between two or more processors. One or more of the functional blocks pictured in Figures 7 and 8 may also include one or more memory devices containing software, firmware, and data, including stored media data files, for controlling access to a secure facility in accordance with one or more embodiments of the present invention. These memory devices may include, but are not limited to, the following types of devices: cache, ROM, PROM, EPROM, EEPROM, flash, SRAM, and DRAM. Those skilled in the art will further appreciate that functional blocks and details not necessary for an understanding of an invention have been omitted from the drawings and discussion herein. Finally, those skilled in the art will appreciate that a portable electronic device according to some embodiments of the invention may include fewer than all of the elements pictured in Figure 7.

The skilled practitioner should thus appreciate that the present invention broadly provides methods and apparatus for controlling access to a secure facility.

The present invention may, of course, be carried out in other specific ways than those herein set forth without departing from the scope of the invention. Thus, the present invention is not limited to the features and advantages detailed in the foregoing description, nor is it limited by the accompanying drawings. Indeed, the present invention is limited only by the following claims.

## Claims

1. A portable electronic device (700), comprising a camera unit (750), a wireless communication unit (710), a display unit (760) and a processing unit (770), the processing unit (770) configured to:
capture a digital image (210) of a predetermined feature of a secure facility (100), using the camera unit (750);
send the digital image (210) via a wireless communications network, using the wireless communication unit (710), to a remote processing node (800) for a determination of whether access to the secure facility (100) is permitted; and
receive from the remote processing node (800), via the wireless communication network and the wireless communication unit (710), a security access token comprising a user-readable access code configured to be entered into a keypad controlling a locking device barring access to the secure facility (100);
display the security access token and one or more dummy tokens on the display unit (760).

2. The portable electronic device (700) of claim 1, wherein the processing unit (770) is further configured to send at least one user-specific authentication factor to the remote processing node (800) for the determination of whether access to the secure facility (100) is permitted.

3. The portable electronic device (700) of claim 1, further comprising a short-range wireless transmitter (780), wherein the security access token comprises an electronic code for use by an electronic locking device barring access to the secure facility (100), and wherein the processing unit (770) is further configured to transmit the electronic code, using the short-range wireless transmitter (780), to the electronic locking device.

4. The portable electronic device (700) of claim 1, further comprising a positioning unit (720), wherein the processing unit (770) is further configured to determine location information for the portable electronic device (700), using the positioning unit (720), and to send the location information to the remote processing node (800) for the determination of whether access to the secure facility (100) is permitted.

5. The portable electronic device (700) of claim 1, wherein the processing unit (770) is further configured to retrieve location information for the portable electronic device (700), using the wireless communication unit (710), and to send the location information to the remote processing node (800) for the determination of whether access to the secure facility (100) is permitted.

6. A method of accessing a secure facility (100), comprising:
capturing (510) a digital image of a predetermined feature of the secure facility, using a portable device comprising a camera unit;
sending (530) the digital image via a wireless communications network to a remote processing node, using a wireless communication unit included in the portable device, for a determination of whether access to the secure facility is permitted; and
receiving (540) from the remote processing node, via the wireless communications network and the wireless communication unit, a security access token comprising a user-readable access code configured to be entered into a keypad controlling a locking device barring access to the secure facility (100);
displaying the security access token and one or more dummy tokens on a display unit of the portable device.

7. The method of claim 6, further comprising sending at least one user-specific authentication factor to the remote processing node for the determination of whether access to the secure facility (100) is permitted.

8. The method of claim 6, wherein the security access token comprises an electronic code for use by an electronic locking device barring access to the secure facility (100), the method further comprising transmitting the electronic code to the electronic locking device, using a short-range wireless transmitter of the portable device.

9. The method of claim 6, further determining location information for the portable device, using a positioning unit of the portable device, and sending the location information to the remote processing node for the determination of whether access to the secure facility (100) is permitted.

10. The method of claim 6, further comprising retrieving location information for the portable device via the wireless communications network, using the wireless communication unit, and sending the location information to the remote processing node for the determination of whether access to the secure facility is permitted.

## Patentansprüche

1. Tragbare elektronische Vorrichtung (700), welche eine Kameraeinheit (750), eine Einheit (710) zur drahtlosen Kommunikation, eine Anzeigeeinheit (760) und eine Verarbeitungseinheit (770) umfasst, wobei die Verarbeitungseinheit (770) ausgestaltet ist, um:
ein digitales Bild (210) eines vorbestimmten Merkmals einer Sicherheitseinrichtung (100) mittels der Kameraeinheit (750) zu erfassen;
das digitale Bild (210) über ein drahtloses Kommunikationsnetz mittels der Einheit (710) zur drahtlosen Kommunikation zu einem abgesetzten Verarbeitungsknoten (800) zur Bestimmung, ob ein Zugang zu der Sicherheitseinrichtung (100) erlaubt ist, zu senden; und
von dem abgesetzten Verarbeitungsknoten (800) über das drahtlose Kommunikationsnetz und die Einheit (710) zur drahtlosen Kommunikation ein Sicherheitszugangstoken zu empfangen, welches einen von einem Benutzer lesbaren Zugangscode umfasst, welcher ausgestaltet ist, um in eine Tastatur eingegeben zu werden, welche eine Verriegelungsvorrichtung steuert, die einen Zugang zu der Sicherheitseinrichtung (100) blockiert.

2. Tragbare elektronische Vorrichtung (700) nach Anspruch 1, wobei die Verarbeitungseinheit (770) darüber hinaus ausgestaltet ist, um zumindest einen Benutzer-spezifischen Authentifizierungsfaktor zu dem abgesetzten Verarbeitungsknoten (800) für die Bestimmung, ob ein Zugang zu der Sicherheitseinrichtung (100) erlaubt ist, zu senden.

3. Tragbare elektronische Vorrichtung (700) nach Anspruch 1, darüber hinaus einen drahtlosen Sender (780) für eine kurze Reichweite umfassend, wobei das Sicherheitszugangstoken einen elektronischen Code für eine Verwendung durch eine elektronische Verriegelungsvorrichtung umfasst, welche einen Zugang zu der Sicherheitseinrichtung (100) blockiert, und wobei die Verarbeitungseinheit (770) darüber hinaus ausgestaltet ist, um den elektronischen Code mittels des drahtlosen Senders (780) mit kurzer Reichweite zu der elektronischen Verriegelungsvorrichtung zu senden.

4. Tragbare elektronische Vorrichtung (700) nach Anspruch 1, darüber hinaus eine Positionsbestimmungseinheit (720) umfassend, wobei die Verarbeitungseinheit (770) darüber hinaus ausgestaltet ist, um eine Ortsinformation für die tragbare elektronische Vorrichtung (700) mittels der Positionsbestimmungseinheit (720) zu bestimmen, und um die Ortsinformation zu dem abgesetzten Verarbeitungsknoten (800) für die Bestimmung, ob ein Zugang zu der Sicherheitseinrichtung (100) erlaubt ist, zu senden.

5. Tragbare elektronische Vorrichtung (700) nach Anspruch 1, wobei die Verarbeitungseinheit (770) darüber hinaus ausgestaltet ist, um eine Ortsinformation für die tragbare elektronische Vorrichtung (700) mittels der Einheit (710) zur drahtlosen Kommunikation abzufragen, und um die Ortsinformation zu dem abgesetzten Verarbeitungsknoten (800) für die Bestimmung, ob ein Zugang zu der Sicherheitseinrichtung (100) erlaubt ist, zu senden.

6. Verfahren zum Zugang zu einer Sicherheitseinrichtung (100), umfassend:
Erfassen (510) eines digitalen Bildes eines vorbestimmten Merkmals der Sicherheitseinrichtung mittels einer tragbaren Vorrichtung, welche eine Kameraeinheit umfasst;
Senden (530) des digitalen Bildes mittels eines drahtlosen Kommunikationsnetzes zu einem abgesetzten Verarbeitungsknoten mittels einer Einheit zur drahtlosen Kommunikation, welche die tragbare Vorrichtung aufweist, für eine Bestimmung, ob ein Zugang zu der Sicherheitseinrichtung erlaubt ist; und
Empfangen (540) von dem abgesetzten Verarbeitungsknoten über das drahtlose Kommunikationsnetz und die Einheit zur drahtlosen Kommunikation eines Sicherheitszugangstokens, welches einen von einem Benutzer lesbaren Zugangscode umfasst, welcher ausgestaltet ist, um in eine Tastatur eingegeben zu werden, welche eine Verriegelungsvorrichtung steuert, die einen Zugang zu der Sicherheitseinrichtung (100) blockiert;
Darstellen des Sicherheitszugangstokens und eines oder mehrerer Dummy-Token auf einer Anzeigeeinheit der tragbaren Vorrichtung.

7. Verfahren nach Anspruch 6, darüber hinaus umfassend Senden von mindestens einem Benutzer-spezifischen Authentifizierungsfaktor zu dem abgesetzten Verarbeitungsknoten für die Bestimmung, ob ein Zugang zu der Sicherheitseinrichtung (100) erlaubt ist.

8. Verfahren nach Anspruch 6, wobei das Sicherheitszugangstoken einen elektronischen Code für eine Verwendung durch eine elektronische Verriegelungsvorrichtung umfasst, welche einen Zugang zu der Sicherheitseinrichtung (100) blockiert, wobei das Verfahren darüber hinaus ein Senden des elektronischen Codes zu der elektronischen Verriegelungsvorrichtung mittels eines drahtlosen Senders mit kurzer Reichweite der tragbaren Vorrichtung umfasst.

9. Verfahren nach Anspruch 6, darüber hinaus ein Bestimmen einer Ortsinformation für die tragbare Vorrichtung mittels einer Positionsbestimmungseinheit der tragbaren Vorrichtung und Senden der Ortsinformation zu dem abgesetzten Verarbeitungsknoten für die Bestimmung, ob ein Zugang zu der Sicherheitseinrichtung (100) erlaubt ist, umfassend.

10. Verfahren nach Anspruch 6, darüber hinaus ein Abfragen einer Ortsinformation für die tragbare Vorrichtung mittels des drahtlosen Kommunikationsnetzes mittels der Einheit zur drahtlosen Kommunikation und Senden der Ortsinformation zu dem abgesetzten Verarbeitungsknoten für die Bestimmung, ob ein Zugang zu der Sicherheitseinrichtung erlaubt ist, umfassend.

## Revendications

1. Dispositif électronique portable (700), comprenant une unité de caméra (750), une unité de communication sans fil (710), une unité d'affichage (760) et une unité de traitement (770), l'unité de traitement (770) étant configurée pour :
capturer une image numérique (210) d'une caractéristique prédéterminée d'une installation sécurisée (100), en utilisant l'unité de caméra (750) ;
envoyer l'image numérique (210) via un réseau de communication sans fil, en utilisant l'unité de communication sans fil (710), à un noeud de traitement distant (800) pour déterminer si l'accès à l'installation sécurisée (100) est autorisé ou non ; et
recevoir à partir du noeud de traitement distant (800), via le réseau de communication sans fil et l'unité de communication sans fil (710), un jeton d'accès de sécurité comprenant un code d'accès lisible par un utilisateur configuré pour être entré dans un clavier commandant un dispositif de verrouillage interdisant l'accès à l'installation sécurisée (100) ;
afficher le jeton d'accès de sécurité et un ou plusieurs jetons fictifs sur l'unité d'affichage (760).

2. Dispositif électronique portable (700) de la revendication 1, dans lequel l'unité de traitement (770) est en outre configurée pour envoyer au moins un facteur d'authentification spécifique à un utilisateur au noeud de traitement distant (800) pour déterminer si l'accès à l'installation sécurisée (100) est autorisé ou non.

3. Dispositif électronique portable (700) de la revendication 1, comprenant en outre un émetteur sans fil à courte portée (780), dans lequel le jeton d'accès de sécurité comprend un code électronique à utiliser par un dispositif de verrouillage électronique interdisant l'accès à l'installation sécurisée (100), et dans lequel l'unité de traitement (770) est en outre configurée pour transmettre le code électronique, en utilisant l'émetteur sans fil à courte portée (780), au dispositif de verrouillage électronique.

4. Dispositif électronique portable (700) de la revendication 1, comprenant en outre une unité de positionnement (720), dans lequel l'unité de traitement (770) est en outre configurée pour déterminer des informations de localisation pour le dispositif électronique portable (700), en utilisant l'unité de positionnement (720), et pour envoyer les informations de localisation au noeud de traitement distant (800) pour déterminer si l'accès à l'installation sécurisée (100) est autorisé ou non.

5. Dispositif électronique portable (700) de la revendication 1, dans lequel l'unité de traitement (770) est en outre configurée pour récupérer des informations de localisation pour le dispositif électronique portable (700), en utilisant l'unité de communication sans fil (710), et pour envoyer les informations de localisation au noeud de traitement distant (800) pour déterminer si l'accès à l'installation sécurisée (100) est autorisé ou non.

6. Procédé d'accès à une installation sécurisée (100), consistant à :
capturer (510) une image numérique d'une caractéristique prédéterminée de l'installation sécurisée, en utilisant un dispositif portable comprenant une unité de caméra ;
envoyer (530) l'image numérique via un réseau de communication sans fil à un noeud de traitement distant, en utilisant une unité de communication sans fil incluse dans le dispositif portable, pour déterminer si l'accès à l'installation sécurisée est autorisé ou non ; et
recevoir (540) à partir du noeud de traitement distant, via le réseau de communication sans fil et l'unité de communication sans fil, un jeton d'accès de sécurité comprenant un code d'accès lisible par un utilisateur configuré pour être entré dans un clavier commandant un dispositif de verrouillage interdisant l'accès à l'installation sécurisée (100) ;
afficher le jeton d'accès de sécurité et un ou plusieurs jetons fictifs sur une unité d'affichage du dispositif portable.

7. Procédé de la revendication 6, comprenant en outre l'envoi d'au moins un facteur d'authentification spécifique à un utilisateur au noeud de traitement distant pour déterminer si l'accès à l'installation sécurisée (100) est autorisé ou non.

8. Procédé de la revendication 6, dans lequel le jeton d'accès de sécurité comprend un code électronique à utiliser par un dispositif de verrouillage électronique interdisant l'accès à l'installation sécurisée (100), le procédé comprenant en outre la transmission du code électronique au dispositif de verrouillage électronique, en utilisant un émetteur sans fil à courte portée du dispositif portable.

9. Procédé de la revendication 6, comprenant en outre la détermination d'informations de localisation pour le dispositif portable, en utilisant une unité de positionnement du dispositif portable, et l'envoi des informations de localisation au noeud de traitement distant pour déterminer si l'accès à l'installation sécurisée (100) est autorisé ou non.

10. Procédé de la revendication 6, comprenant en outre la récupération d'informations de localisation pour le dispositif portable via le réseau de communication sans fil, en utilisant l'unité de communication sans fil, et l'envoi des informations de localisation au noeud de traitement distant pour déterminer si l'accès à l'installation sécurisée est autorisé ou non.
